Europäisches Patentamt

European Patent Office

Office européen des brevets

(11) Publication number: **0 211 511**
**A1**

## (12) EUROPEAN PATENT APPLICATION

(21) Application number: 86305024.1

(22) Date of filing: 27.06.86

(51) Int. Cl.⁴: **B65D 81/34** , A47J 31/02

(30) Priority: 28.06.85 JP 140709/85
24.12.85 JP 197451/85 U

(43) Date of publication of application:
25.02.87 Bulletin 87/09

(84) Designated Contracting States:
AT BE CH DE FR GB IT LI NL SE

(71) Applicant: KATAOKA & CO., LTD.
6-4 Toranomon 2-chome
Minato-ku Tokyo(JP)

(72) Inventor: Shimada, Tetsuji
6-39-405 Yashio 5-Chome, Shinagawa-ku
Tokyo(JP)

(74) Representative: Daley, Michael John et al
F.J. CLEVELAND & COMPANY 40/43
Chancery Lane
London, WC2A 1JQ(GB)

(54) Coffee maker.

(57) A dripping coffee maker comprises a coffee maker receptacle (1, 20, 40) and a coffee containing part (2, 21, 50) formed either integrally with or separately from the coffee maker receptacle. The coffee containing part (2, 21, 50) is provided with a coffee container comprising an upper filter (10, 27, 54) and a lower filter (10, 27, 54), a reservoir for coffee essence formed between the bottom plate (8, 29, 53) of the coffee containing part and the lower filter, and a plurality of straining holes (13a-13c, 31, 58a-58c) of different diameters formed in the bottom plate and adapted to be selectively used for passage of the coffee essence.

FIG. 1

## COFFEE MAKER

This invention relates to a dripping coffee maker having an upper filter and a lower filter which are spread fast in the bottom part of a cup-like maker proper so as to form a coffee container holding ground coffee sealed therein, whereby extraction of coffee essence from the ground coffee is effected by causing hot water in the coffee maker proper to pass through this coffee container.

Dripping coffee makers of the type having ground coffee sealed therein have been widely known in the art. The dripping coffee maker of an ordinary class heretofore known in the art has filters of filter paper spread fast one each in an upper and lower planes in the bottom part of a cup-like maker proper and ground coffee of a required amount sealed in a coffee container. With the coffee maker of this construction, extraction of coffee essence from ground coffee is attained by mounting the coffee maker on a suitable receptacle such as a coffee cup and then pouring boiling water into the coffee maker proper, thereby allowing the boiling water to pass through the aforementioned container.

The conventional dripping coffee maker of the class described above come in two major types, those of the type having the aforementioned filters spread fast in the bottom part of the coffee maker proper and consequently having a coffee container formed integrally in the coffee maker proper, and those of the cartridge type having a coffee container formed separately of the maker proper and adapted to be detachably set up in the bottom part of the maker proper when it is to be put to use. Basically, the two types of coffee makers operate on a common principle that the extraction of coffee essence from the ground coffee is attained by causing the hot water poured into the coffee maker to be passed through the ground coffee sealed in the container.

The coffee maker based on the combination of a coffee maker proper and a coffee container cartridge permits repeated use of the coffee maker proper while requiring the coffee container cartridge, after use, to be replaced with a new supply. Further, it is economical in the sense that it has the coffee container cartridge as its sole expendable component. In the disposal of waste, this coffee maker enjoys the advantage that since the coffee maker proper is not discarded, the waste is not very bulky and is easy to dispose of.

Heretofore, as a cartridge type coffee maker, i.e. a coffee maker of the type adapted to have a coffee container cartridge detachably mounted for use on the coffee maker proper, the coffee maker disclsoed in Japanese Utility Model Publications No. 59(1984)-40,906 and No. 59(1984)-40,907 has known to the art.

This coffee maker is designed to make the concentration of extracted coffee essence uniform, depending on the permeability of the filters, the available area of the opening of the filters, the amount of ground coffee sealed in the container, etc. Actually, however, the concentration of extracted coffee essence is susceptible of slight lack of uniformity. The coffee maker, therefore, produces the coffee essence of uniform concentration only with difficulty. Heretofore, it has been tried to uniformize the concentration of the extracted coffee essence firstly by fixing the amount of ground coffee to be sealed in the container, secondly by fixing the quality of filters to be used, and thirdly by fixing the available area of a dripping mouth, for example, thereby adjusting and fixing the speed at which the hot water permeates the bed of ground coffee. It is feasible and easy to adjust the amount of ground coffee to be sealed in and the available area of the opening. The adjustment of the permeability of filters, however, is not necessarily easy and is rather prone to variation.

This adjustment of the concentration by the filter is accomplished through selection of the coarseness and thickness of filter, and other similar factors of the material. In the coffee maker of this type, desired uniformity of the concentration is not obtained because the concentration is affected by the speed at which the hot water, on completing its passage through the filters, is drained from the filter. It has been confirmed by an experiment that even when filters of one and the same material are used, the speed of extraction and consequently the concentration of extracted coffee essence are variable. In the conventional coffee makers of the kind just described, efforts are made to uniformize the extracted coffee essence in a certain range of concentration as by specifying filters to be used, fixing the available area of opening, and so on. They nevertheless are incapable of allowing their individual users to adjust finely concentration of extracted coffee essence to suit their own taste.

In the circumstances, there has been proposed a coffee maker which is provided on the bottom part of the coffee container, namely in the dripping mouth, with a valve capable of varying the area of opening so that the speed of percolation will be adjusted and consequently the concentration of the extracted coffee essence will be varied as desired.

As described above, a number of proposals have been made to date regarding coffee makers of the type which allow the coffee essence to be directly extracted in a receptacle such as a coffee cup by pouring hot water into the coffee maker proper. The conventional coffee makers invariably suffer from the disadvantage that the concentration of the extracted coffee essence is varied and the taste thereof is different. Even in the case of the coffee maker which is provided in the dripping mouth with a valve or some other means capable of adjusting the concentration, precise adjustment of the concentration cannot be obtained in despite of faithful observance of the prescribed procedure. Thus, the procedure for this adjustment is inevitably made on the concession that the adjustment is not fine but coarse.

This invention has been perfected in consequence of a study devoted to eliminating the drawbacks by the conventional coffee makers as described above. It is a object of the present invention to provide a dripping coffee maker which can produce coffee essence of a fixed concentration at all times and, at the same time, enables the concentration of extracted coffee to be precisely set so as to suit the taste of the person who drinks the coffee.

To accomplish the object described above according to the present invention, there is provided a dripping coffee maker which comprises a coffee maker proper shaped like a cup and a coffee containing part formed inside the coffee maker proper and composed of a coffee container defined by an upper and lower filters, a coffee essence reservoir formed between the lower filter and the bottom plate of the coffee maker proper, and a plurality of straining holes of varying diameters formed in the bottom plate and adapted for the coffee essence to be passed through any one of the straining holes to be freely selected.

The coffee containing part may be formed in a stationary pattern integrally with or formed separately of the coffee maker proper. In the coffee container intervening between the upper and lower filters of the coffee containing part, ground coffee of a prescribed amount are sealed. After only one of the plurality of straining holes formed in the bottom plate of the coffee containing part has been selected and set in an opened state, hot water is poured down into the coffee containing part. Consequently, the hot water passes through the bed of ground coffee in the coffee containing part and the hot water which has extracted coffee essence, namely coffee ready to drink, is temporarily stored in the reservoir and left filling it up and then falling down. Thus, extracted coffee essence is obtained at a fixed speed. Selection of one desired hole from the plurality of straining holes is attained by pasting seals in advance one each to all the straining holes and removing the particular one or more seals from the straining hole selected immediately prior to use. Otherwise, the selection of one particular straining hole of a desired size is effected by forming a hole in the bottom plate of the coffee maker proper at the position corresponding to one of the aforementioned plurality of straining holes and allowing the remainders of the holes to be kept closed with the bottom plate and selecting the relative position at which the coffee containing part is fitted into the coffee maker proper.

This invention consists in materializing stable extraction of coffee essence in a fixed concentration at all times by allowing the coffee essence which has passed through the filter to be temporarily stored in a reservoir, thereby eliminating the direct formation of drops of coffee essence, promoting smooth passage of coffee essence at a fixed speed, and allowing the substantial time of contact between the hot water and the ground coffee to be regulated by the straining holes formed in the bottom plate.

Further, this invention aims to provide a coffee maker which, in due appreciation of the consistency of the speed of coffee percolation through the aforementioned straining holes, forms a plurality of straining holes bored in the bottom plate, keeps the straining holes closed with peelable seals or detachable plugs and, immediately prior to use of the coffee percolation, selectively opens such seals or plugs thereby adjusting the area of opening of such straining holes and effecting free selection of the concentration of extracted coffee essence.

A more complete appreciation of the invention and many of the attendant advantages thereof will be readily obtained as the same becomes better understood by reference to the following detailed description when considered in connection with the accompanying drawings, wherein:-

Figure 1 is a central longitudinal section of the essential part of a coffee maker as a first embodiment of the present invention;

Figure 2 is a plain view solely of a coffee containing part proper;

Figure 3 is a bottom view of the same coffee containing part proper;

Figure 4 is a longitudinally sectioned front view illustrating a coffee container cartridge fitted in a coffee maker proper for use;

Figure 5 is a bottom view of the essential part of a coffee maker as a second embodiment of the present invention;

Figure 6 is a partially longitudinal section of the same coffee maker;

Figure 7 is a longitudinal cross section of a coffee maker as a third embodiment of this invention;

Figure 8 is a central longitudinal front view illustrating a coffee maker as a fourth embodiment of this invention ready for use;

Figure 9 is a front view of the coffee maker proper, with the right half part thereof sectioned to expose the interior;

Figure 10 is a plain view of the coffee maker proper;

Figure 11 is a bottom view of the same coffee maker proper;

Figure 12 is a partially magnified cross section of a coffee container cartridge;

Figure 13 is a plain view of a coffee container cartridge deprived of filters and emptied of ground coffee;

Figure 14 is a bottom view of the same coffee container cartridge; and

Figure 15 is a partially magnified cross section illustrating the relation of communication between one through hole and one straining hole.

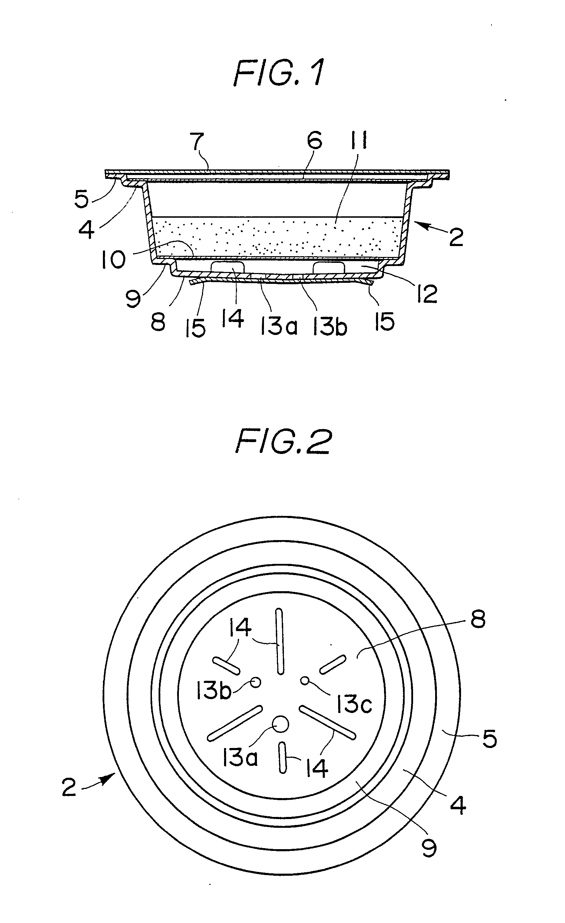

Figures 1 through 4 depict a first embodiment of the present invention. With reference to the diagrams, 1 denotes a coffee maker proper shaped like a cup and 2 a coffee containing part provided in the bottom part of the coffee maker proper.

The coffee containing part 2 illustrated here is designed in a cartridge type and formed separately of the coffee maker proper 1. It is adapted so as to be detachably fitted to a tubular fitting part 3 disposed on the bottom part of the proper 1.

As illustrated in detail in Figure 1 and Figure 2, this coffee containing part 2 is shaped like a saucer and is provided in the upper opening part thereof with flanges 4, 5 extended in two steps. A upper filter 6 made of filter paper is spread fast on the inner lower flange 4 and a film 7 for airtight closure is spread fast on the outer flange 5. A radially contracted step 9 is formed at the lower end of a barrel continuing into a bottom plate 8 serving to close the lower side of the coffee containing part 2. A lower filter 10 is spread fast on the upper surface of this radially contracted step 9. Ground coffee 11 is contained in the space formed between the aforementioned upper filter 6 and the lower filter 10. A reservoir 12 is formed between the lower filter 10 and the bottom plate 8.

The bottom plate 8 is radially inclined downwardly toward the central part thereof. The bottom plate 8 is provided in the most sunken central part thereof with three straining holes 13a, 13b, and 13c of large, medium, and small diameters. On the upper side of this bottom plate 8, a plurality of raised strips 14 are radially formed in portions avoiding the aforementioned straining holes so as to support the underside of the aforementioned lower filter 10.

In the diagrams, 15 denotes a seal peelably attached to the lower side of the bottom plate 8 so as to close the straining holes 13a, 13b, and 13c formed in the bottom plate 8.

The aforementioned coffee containing part 2 has the saucer-shaped main part thereof formed of a plastic material. In the space intervening between the upper and lower filters 6, 10, the ground coffee 11 of a required amount are sealed either in a vacuum state or in conjunction with an inert gas. Then, by pasting a film 7 to the upper opening part and a seal 15 to the lower side of the bottom plate 8, the interior of the coffee containing part is airtightly closed to ensure preservation of the ground coffee.

Preparatory to use of the dripping coffee maker, the aforementioned film 7 is peeled to expose the upper filter 6. Then, depending on the concentration of extracted coffee essence to be desired, the seal 15 closing the straining hole 13c of the smallest diameter is peeled to open the straining hole where the coffee is desired to be rather stronger than otherwise. The coffee containing part 2 in the resulting state is slid down into the coffee maker proper 1 and set fast in the fitting part 3 formed on the bottom part thereof. Then, the coffee maker is mounted on a receptacle 16 such as a coffee cup.

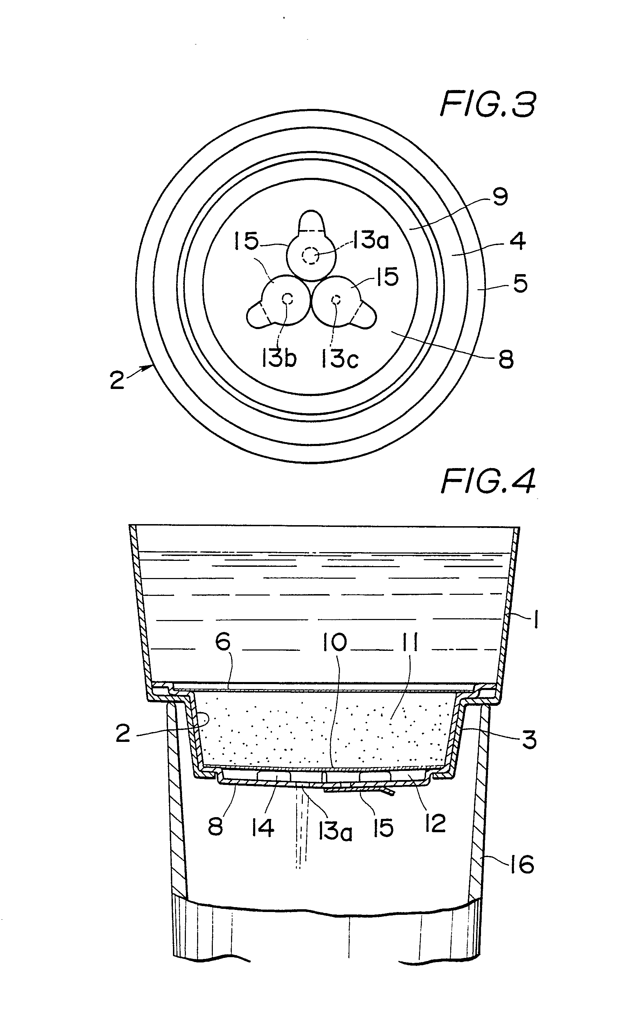

Figure 4 depicts the coffee maker mounted on the receptacle 16, with coffee essence being extracted by the hot water poured into the coffee maker proper 1. The hot water poured into the proper 1 passes through the upper filter 6, flows into the bed of ground coffee 11 sealed therein, and extracts coffee essence from the ground coffee. The hot water which has extracted the coffee essence, namely the coffee as a drink, passes through the lower filter 10, falls into the reservoir 12, there to be stored temporarily, then flows through the straining hole 13c (or 13a or 13b) in the bottom plate into the receptacle 16.

The hot water poured into the coffee maker converts itself into the coffee as a drink through the successive steps mentioned above. When this hot water is passed through the filter 10 and then retained in the reservoir 12, the part of the hot water which fails to flow through the filter 10 in consequence of the suspended flow is held in contact with the ground coffee 11 during the retention to work effectively in amply extracting the coffee essence. The coffee thus percolated and stored in the reservoir 12 falls down into the receptacle at the speed proportionate to the area of opening of the opened straining hole 13c, irrespectively of the permeability of the filter 10.

The dripping coffee maker of the present invention enables the concentration of extracted coffee essence to be set with great exactness because the extracted coffee essence passing through the lower filter is stored in the reservoir 12 set up below the lower filter as described above and, as a result, the substantial speed of coffee percolation is adjusted by the area of opening of the straining hole formed in the bottom plate. When only one straining hole is provided, the extracted coffee essence is obtained in a uniform concentration at all times within the range. When a plurality of straining holes are provided, selection of an exact concentration can be attained by selection of the particular hole to be opened or more precisely by selection of the seal 15 to be peeled.

In an experiment, a straining hole 13a of 3 mm in diameter, a straining hole 13b of 1.5 mm in diameter, and a straining hole 13c of 1.2 mm in diameter were bored in the bottom plate and the extracted coffee essence was allowed to pass through these straining holes opened sequentially one at a time in the decreasing order of diameter. It took about one minute and 30 seconds, about 2 minutes and 30 seconds, and about 3 minutes and 30 seconds respectively for the coffee essence to complete its flow through the straining holes 13a, 13b, and 13c. In the coffee drinks consequently obtained, change of concentration from light through medium to dark was observed. Through several repetitions of this experiment, it was confirmed that the aforementioned times required for passage were approximately constant.

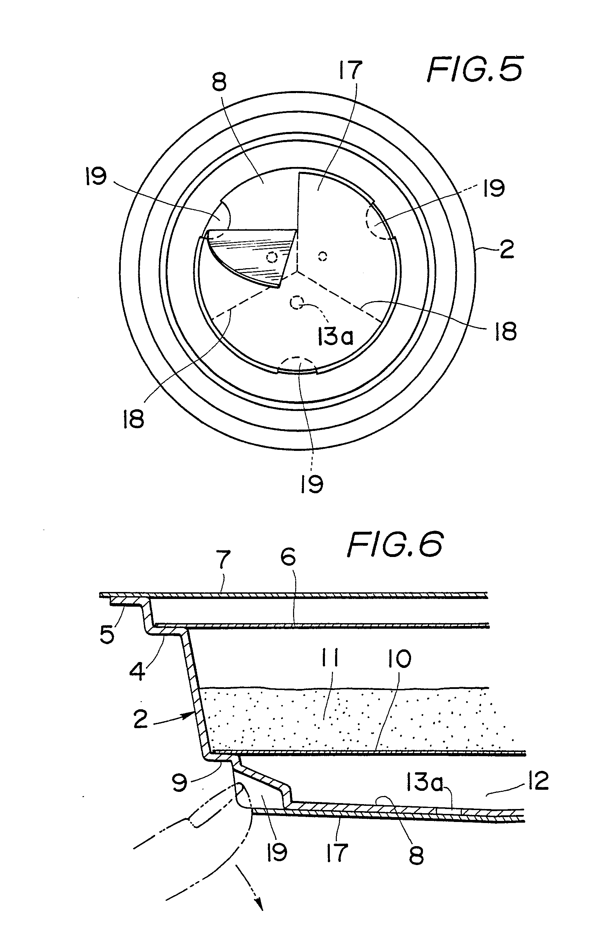

Figures 5 and 6 illustrate, as a second embodiment of the invention, a modification of the seal adapted to be pasted to the lower side of the bottom plate 8 of the coffee containing part 2 for the purpose of selectively closing the straining holes 13a, 13b, and 13c.

A seal 17 shown here is formed in a circle conforming to the shape of the bottom plate 8 so as to cover the entire surface of the bottom plate. To open a selected hole, the segmental portion of the seal corresponding to that particular straining hole is turned up as illustrated and then cut off along a line of perforations 18 formed in advance for the purpose of separation. To facilitate the separation of the particular segmental portion of the seal to be peeled, depressions 19 are formed in the peripheral part of the bottom plate 8 of the coffee containing part so that they may easily hooked up with a finger tip.

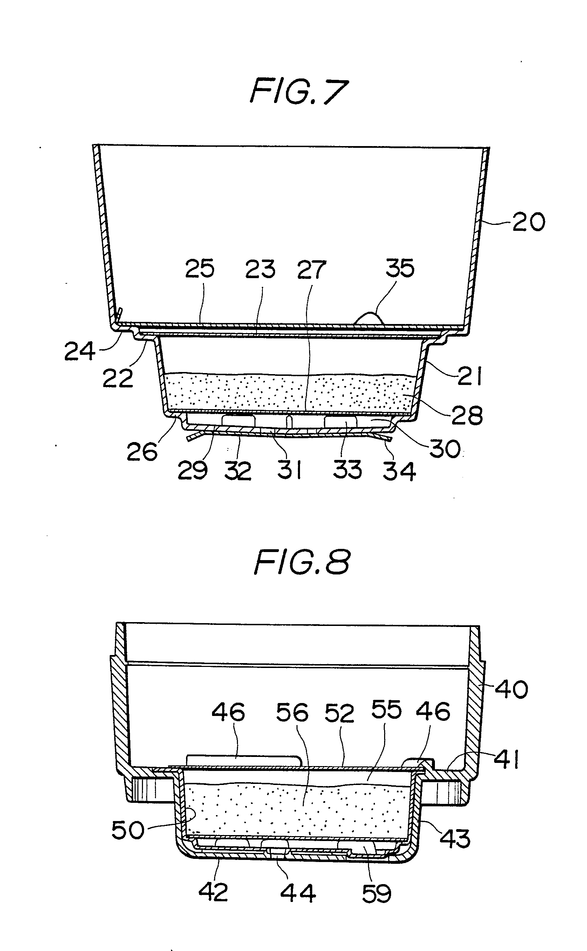

Figure 7 depicts a third embodiment of the present invention in which a coffee containing part 21 is integrally formed in a saucer-like bottom part of a coffee maker proper 20 in the place of the cartridge type coffee containing part 2 involved in the embodiment described above. An upper filter 23 is spread fast on a step 22 below the stepped bottom part of the coffee maker proper 20 constituting a connection part between the coffee containing part 21 and the coffee maker proper 20, and a film 25 is spread fast on the upper side of an upper step 24. A lower filter 27 is spread fast on a step 26 formed in a radially contracted pattern at the lower end of the coffee containing part. Ground coffee 28 is sealed in the space intervening between the aforementioned upper filter 23 and the lower filter 27. A reservoir 30 is formed between the lower filter 27 and the bottom plate 29. In the bottom plate 29, straining holes 31 respectively having prescribed diameters are formed similarly to the embodiment described above. Each of the straining holes is closed with a seal 32 which is pasted to the lower side of the bottom plate.

The coffee maker of this embodiment is identical in construction with the cartridge type coffee maker except for the difference which resides in the fact that coffee containing part 21 is formed integrally with the coffee maker proper 20. Preparatory to use, the film 25 spread fast for the purpose of airtight closure is peeled off and the particular one of the seals 32 is peeled off before the coffee maker is mounted on the receptacle.

In the diagram, 33 denotes raised strips for preventing the lower filter 27 from sagging, 34 a pinch piece to be used for the separation of the seal 32, and 35 a pinch piece for the separation of the film 25.

In the foregoing embodiments, the straining holes formed in the bottom plate of the coffee containing part have been described as being invariably closed with peelable seals 15, 17, and 32 which are to be peeled to open the straining holes before the coffee maker is put to use. Optionally, the closure of the straining holes may be attained by fitting plugs into the straining holes instead of pasting such seals. These plugs are selectively pulled out of the straining holes before the coffee maker is put to use. Any of the conventional means available for closing and opening the straining holes may be used herein in the place of the seals or plugs mentioned above. Further in the preceding embodiments, provided with three straining holes each. The number of these straining holes need not be limited to 3 but may be decreased to 2 or increased to 4 or more. In a construction incorporating therein only two straining holes, medium and small, for example, when both the two straining holes are opened at once by separation of their seals, they are enabled to function jointly as though they formed a straining hole of a size equaling the sum of the sizes of the medium and small straining holes. Thus, this construction can be expected to function similarly to a construction using three straining holes, large, medium, and small.

Particularly when the means of effecting closure with a peelable seal is resorted to, by forming a straining hole of a large size and closing this hole with a seal which is adapted to be peeled in any desired proportion of its entire area, it is enabled to select the area of opening of the straining hole and consequently vary the concentration of extracted coffee essence.

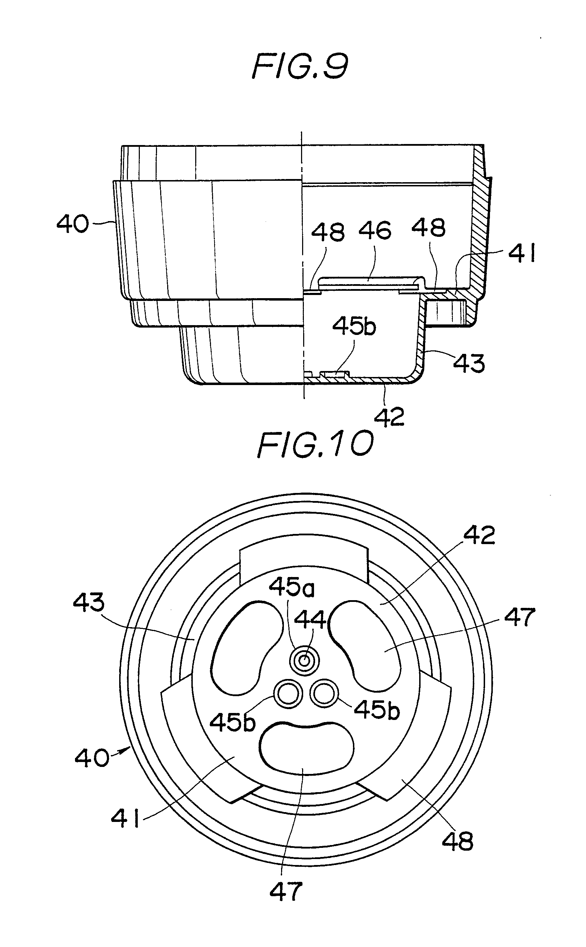

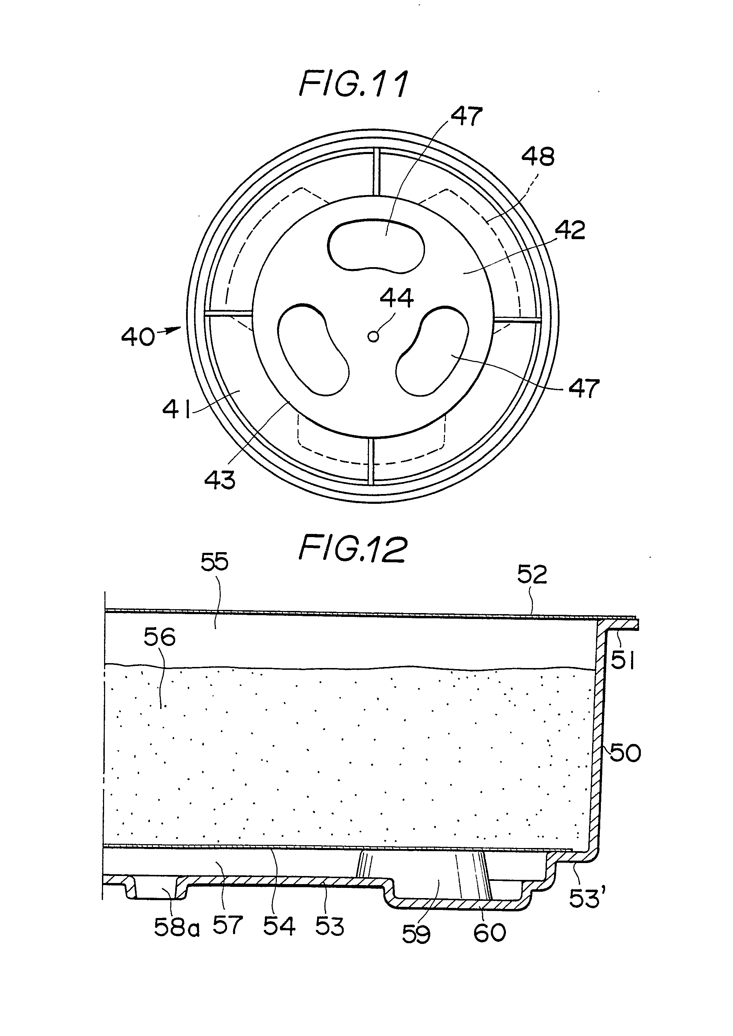

Figure 8 through Figure 15 depict a fourth embodiment of this invention, which is substantially equal in basic construction to the first embodiment. In the central portion of a bottom part 41 of a cup-like coffee maker proper 40, there is provided a fitting part 43 having a bottom plate 42. The bottom plate 42 of the fitting part is provided with one through hole 44, an annular seal member 45a encircling the upper periphery of the through hole 44, and two seal member 45b identical in shape with the seal member 45a. On the edge of an upper opening of the fitting part, namely on the bottom part 41, there is disposed a fitting piece 46 having claws projected toward the opening part.

The aforementioned through hole 44 is meant to correspond to the straining holes which are formed in a coffee containing part 50. In the present embodiment, one through hole 44, one seal member 45a encircling this through hole, and two seal member 45b are disposed as regularly spaced around the central point of the bottom plate 42 formed in the shape of true circle.

The coffee containing part 50 is substantially identical in construction with that of the first embodiment. It is formed so as to have as its main part a cup-like bottomed container capable of being tightly fitted into the aforementioned fitting part 43. A flange 51 is formed around the outer edge of the upper opening of this container and a filter 52 is spread fast on this flange 51. In this barrel part of the container close to the bottom plate 53, a radially contracted stepped part 53' is formed. A lower filter 54 is spread fast on this stepped part 53' A coffee container 55 is formed with these two filters 52, 54 and is adapted to have ground coffee 56 of a required amount sealed therein. The space which is formed between the aforementioned lower filter 54 and the bottom plate 53 serves as a reservoir 57 for storing the coffee essence.

In the bottom plate 53 which substantially constitutes itself a bottom for the reservoir 57, three straining holes 58a, 58b, and 58c respectively having large, medium, and small diameters are formed as equally spaced and aligned to the seals 45a, 45b formed in the bottom plate 42 of the aforementioned fitting part 43, and more precisely to the through hole 44. On the upper side of the bottom plate 53, there are formed a plurality of raised strips 59 intended to prevent the filter 54 from sagging and secure the space for the reservoir.

Three protuberances 60 raised from the lower side of the bottom plate 53 are disposed as opposed to insertion windows 47 formed in the bottom plate 42 of the aforementioned fitting part 43. They each serve as a finger socket to be used when the coffee containing part 50 set in place is to be removed from the fitting part 43 with a push of the finger tip.

The enclosures of the coffee maker proper 40 and the coffee containing part 50 described above are molded of a thermoplastic synthetic resin separately of each other. In the enclosure of the coffee containing part, the filters 52, 54 are spread fast thereon after the molding of the enclosure. Simultaneously with this step of process, the required amount of ground coffee 56 is sealed in the space enclosed with the filters.

Now, actual use of the coffee maker constructed as described above will be explained. Preparatory to the fitting of the coffee containing part 50, when the concentration of percolated coffee essence is desired to be low, namely when the coffee is desired to be weak, the coffee containing part 50 is inserted into the fitting part 43 in such a manner that the large straining hole 58a formed in the bottom plate 53 of the coffee containing part 50 will be aligned to the through hole 44 formed in the bottom plate 42 of the fitting part and the other straining holes 58b, 58c will be aligned to the respective seals 45b.

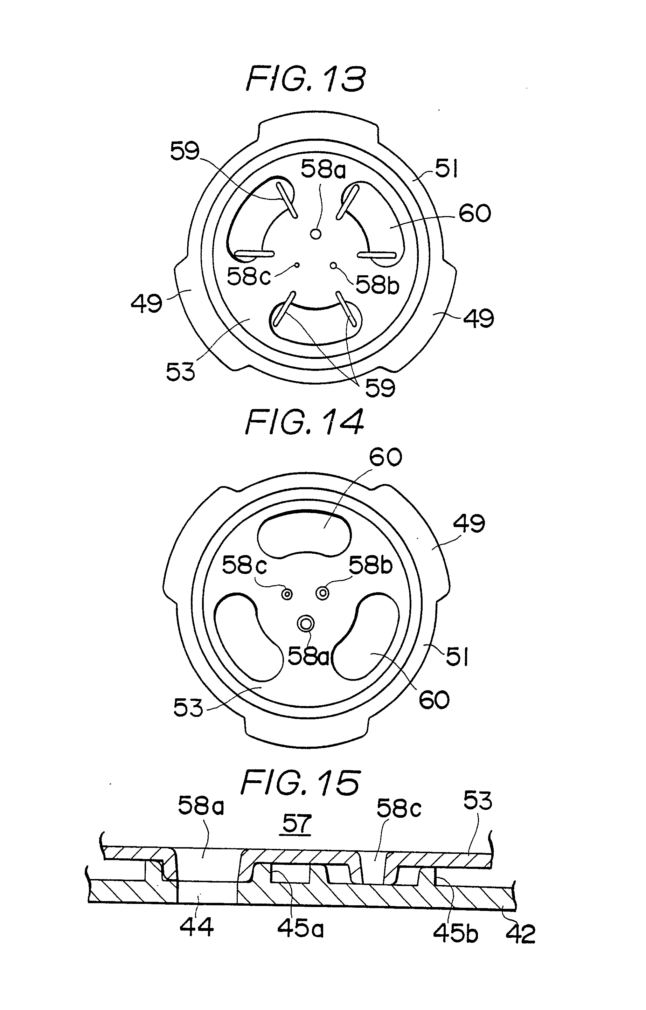

Figure 15 illustrates the relation between the straining holes 58a to 58c and the through hole 44 to be assumed when these parts mentioned above are in a coupled state. It is seen that the large straining hole 58a fits into the seal 45a and communicates with the through hole 44 and the other straining holes 58b, 58c are closed watertightly by coming into contact with the seals 45b which are destitute of a through hole.

As concerns the union of the two parts in the present embodiment, the flange formed around the opening part of the enclosure of the coffee containing part 50 is snapped into engagement with claws of the fitting piece 46 formed around the edge of the opening part of the fitting part 43 by taking advantage of the flexibility of the material of the flange 51 to ensure retention of the state of union and, at the same time, the lower side of the flange 51 is pressed against the edge of the opening to provide watertight seal. Further, the plate 53 of the coffee containing part is pressed against the upper side of the bottom plate 42 of the fitting part to enhance the watertight closure with the aforementioned seals 45a, 45b.

The coffee maker in which the coffee containing part has been set up as described above is mounted on a suitable receptacle such as a coffee cup. Then, hot water is poured into the coffee maker.

The hot water thus poured in the coffee maker proper passes through the upper filter 52, enter the coffee container 55 and comes into contact with the ground coffee 56, extracts coffee essence from the ground coffee and converts itself into coffee ready to drink. The coffee is passed through the lower filter 54, guided into the reservoir 57, and allowed to fall in drops into the receptacle through the one straining hole 58a (or 58b or 58c) which communicates with the through hole 44.

The speed at which the coffee falls in drops is fixed by the diameter of the straining hole communicating with the through hole 44. This speed is highest when the straining hole 58a of the largest diameter is aligned with the through hole 44. Since the retention time of the hot water in the coffee container 55 is consequently shortest, the parcolated coffee is weakest. When the straining hole 58c of the smallest is aligned with the through hole 44, the amount of the coffee allowed to fall per unit time is smallest and the speed of fall is lowest, the percolated coffee is strongest.

To permit selective alignment of the straining holes 58a to 58c to the through hole 44, depressions 48 are formed in the edge of the opening of the fitting part 43 and projections 49 are formed on the flange 51 of the coffee containing part as opposed to the aforementioned depressions 48. When marks "large, medium, and small" are put to these depressions 48 and/or projections 49, they aid in attaining correct matching and expediting the union.

After the coffee essence has been extracted as described above, the coffee containing part which has fulfilled its part is removed from the fitting part and then discarded, leaving the coffee maker proper for reuse. In the present embodiment, the coffee containing part 50 is designed to be fixed in position by being caught on the fitting piece 46 and it is further adapted to be inserted into the fitting part 41. In this arrangement, the removal of the coffee containing part 50 form the fitting part 43 can be easily attained by a push given by a finger tip to the protuberance 60 exposed through the insertion window 47 of the bottom plate 42.

As described above with reference to working examples, the dripping coffee maker of the present invention is characterized by being provided between the lower filter within the coffee containing part and the bottom plate of the coffee containing part with the reservoir having a required volume and, at the same time, being provided in the bottom plate of the coffee containing part with the straining holes. In accordance with the present invention, the coffee maker is so constructed that the percolated coffee essence which has passed through the filter is temporarily stored in the reservoir and thus prevented from directly falling into the receptacle such as a coffee cup and, as a result, the concentration of the percolated coffee is not influenced by the speed of passage of the coffee through the filter but is governed by the diameters of the straining holes formed in the bottom plate. The coffee maker, therefore, is capable of extracting the coffee essence at a fixed speed from the ground coffee and stably setting the concentration of the extracted coffee essence.

Further, in accordance with the present invention, the speed of percolation of the coffee essence can be freely set by suitably varying the area of opening of the aforementioned straining holes. By incorporating therein a plurality of straining holes of suitably varied sizes and allowing them to be selectively opened, the coffee maker is enabled to vary the concentration of the extracted coffee essence and proportionate the concentration with high accuracy.

Besides, in the coffee maker of the present invention, the hot water which is passing through the interior of the coffee containing part is brought into contact with the ground coffee contained between the filters without fail owing to the temporary retention of the extracted coffee essence in the reservoir. Furthermore, owing to the established state of temporary retention, the extracted coffee essence is allowed to permeate the ground coffee uniformly throughout to ensure efficient percolation of coffee essence.

Of course in this invention, since the permeability of the filters does not affect the concentration of percolated coffee essence at all, the filters enjoy freedom of selection of their material as compared with the filters used in the conventional coffee maker. The coffee maker of this invention proves advantageous from the standpoint of quality control because the condition of tension of the filters has no effect upon the extraction of coffee essence.

Moreover, the coffee maker of the present invention is capable of perfectly sealing the interior of the coffee containing part airtightly by closing the straining holes with seals or plugs and covering the upper filter with a film. It, therefore, enjoys the advantage that the ground coffee are effectively protected against oxidation and allowed to exhibit high preservability.

The number of straining holes to be bored in the coffee containing part is not limited. The proper number falls in the range of 2 to 4. Besides, the diameter of the straining holes can be freely selected to suit the taste of the user.

In a combination between a plurality of straining holes bored in the coffee containing part, and as many through holes bored in the coffee maker proper, the substantial available area of opening can be varied in numerous sizes with increased fineness. Of course, the communication between the through hole and the straining hole need not be limited to the one-to-one relation.

Obviously, many modifications and variations of the present invention are possible in light of the above teachings. It is therefore to be understood that within the scope of the appended claims, the present invention may be practiced otherwise than as specifically described herein.

## Claims

1. A coffee maker, which comprises a cup-like coffee maker proper (1,20,40), and a coffee containing part (2,21,50) having an upper opening and a bottom plate (8, 29, 53) and provided with an upper filter (6, 23, 52) spread fast on the upper opening, a lower filter (10, 27, 54) spread fast at a distance above the bottom plate, a coffee container defined between said upper filter and said lower filter and adapted to contain ground coffee (11, 56) therein, a reservoir (12, 30, 57) formed between said lower filter (10, 27, 54) and said bottom plate so as to retain therein coffee essence extracted from said ground coffee, and a plurality of straining holes (13a-13c, 31, 58a-58c) of different diameters formed in said bottom plate and adapted to be selectively put use for the passage of said coffee essence.

2. A coffee maker according to Claim 1, wherein said coffee containing part (21) is formed in a stationary pattern integrally inside said coffee maker proper (20).

5. A coffee maker according to Claim 1, wherein said coffee containing part (2, 50) is formed separately of said coffee maker proper (1, 40) so as to be detachably fitted into said coffee maker proper.

4. A coffee maker according to Claim 1, wherein said plurality of straining holes (13a-13c, 31) formed in the bottom plate (8, 29) of said coffee containing part (2, 21) are closed severally by application thereto of peelable seals (15).

5. A coffee maker according to Claim 1, wherein said plurality of straining holes (13a-13c) formed in the bottom plate of said coffee containing part (2) are closed collectively by application thereto of one peelable seal (17) divisible with lines of perforations (18) into as many segments as said straining holes.

6. A coffee maker according to Claim 1, wherein a plurality of raised strips (14, 33, 59) are formed on the upper side of said bottom plate (8, 29, 53) of said coffee containing part (2, 21, 50) at positions avoiding said straining holes (13a-13c, 31, 58a-58c) so as to support said lower filter (10, 27, 54).

7. A coffee maker according to Claim 1, wherein a stepped part (4) for holding said upper filter (6, 23, 52) in position is formed along the peripheral edge of the upper end of said coffee containing part (2, 21, 50), a flange (5, 24) is formed along the upper edge of said stepped part - (4, 22, 41, 51), and a film (7, 25) is spread airtightly on said flange so as to ensure airtightness of the interior of said coffee containing part.

8. A coffee maker according to Claim 7, wherein pinch pieces (35) are formed in part of the peripheral part of said closing film (7, 25).

9. A coffee maker according to Claim 5, wherein depressions (19, 48) are formed in part of the bottom plate (8, 29, 53) of said coffee containing part so as to give rise to partial voids between said seals and said bottom plate.

10. A coffee maker according to Claim 3, wherein a through hole (44) adapted to be opposed to any one of said straining holes (58a-58c) when said coffee containing part (50) is set in place is formed in the bottom plate (53).

11. A coffee maker according to Claim 3, wherein said coffee maker proper (40) has a bottom plate (42) provided with insertion windows - (47), and said coffee containing part (50) has a bottom plate (53) provided with protuberances (60) disposed as opposed to said insertion windows of said coffee maker proper.

## FIG.1

## FIG.2

*FIG.3*

*FIG.4*

*FIG.5*

*FIG.6*

## FIG.7

## FIG.8

# FIG.9

# FIG.10

## FIG.11

## FIG.12

FIG.13

FIG.14

FIG.15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 665 199 (BACHELDER) <br> * Whole document * | 1,3,10 | B 65 D 81/34 <br> A 47 J 31/02 |
| | --- | | |
| X | FR-A- 841 307 (MOREL) <br> * Whole document * | 1,2 | |
| | --- | | |
| A | FR-A-2 457 095 (MOULINEX SA) <br> * Page 2, lines 15-26; figures 1,3 * | 1,4 | |
| | --- | | |
| A | US-A-4 158 329 (McKNIGHT) <br> * Column 6, line 56 - column 7, line 22; figure 3 * | 1-3,6 | |
| | --- | | |
| A | GB-A-2 023 086 (KITAHARA) <br> * Page 1, lines 85-91,112-114 * | 1,2,4, 7 | **TECHNICAL FIELDS SEARCHED (Int. Cl.4)** |
| | --- | | B 65 D |
| A | FR-A-2 270 161 (JOUINEAU) <br><br> * Figure 15 * | 1-3,5, 7,8 | A 47 J |
| | --- | | |
| A | DE-A-1 586 496 (BREITENBACH) | | |
| | --- | | |
| A | BE-A- 790 123 (VERMEYLEN) | | |
| | ---    -/- | | |

The present search report has been drawn up for all claims

| Place of search | Date of completion of the search | Examiner |
|---|---|---|
| THE HAGUE | 02-10-1986 | SCHARTZ J. |

| DOCUMENTS CONSIDERED TO BE RELEVANT | | | Page 2 | |
|---|---|---|---|---|
| Category | Citation of document with indication, where appropriate, of relevant passages | | Relevant to claim | CLASSIFICATION OF THE APPLICATION (Int. Cl.4) |
| A | US-A-3 083 101 (NOURY) | | | |
| | ----- | | | |
| | | | | TECHNICAL FIELDS SEARCHED (Int. Cl.4) |

The present search report has been drawn up for all claims

| Place of search | Date of completion of the search | Examiner |
|---|---|---|
| THE HAGUE | 02-10-1986 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82